# EUROPEAN PATENT APPLICATION

(11) **EP 2 689 941 A1**
(43) Date of publication of application: **29.01.2014**
(21) Application number: 12178023.3
(22) Date of filing: 26.07.2012
(51) Int. Cl.: B60C 27/18, B60C 27/06

(54) **An anti-skid device for wheels**

(71) Applicant: Walmec S.P.A., 31025 S. Lucia di Piave (Treviso) (IT)
(72) Inventor: Zanetti, Paolo, 31015 CONEGLIANO (TREVISO) (IT)
(74) Representative: Colò, Chiara

(57) **Abstract**

Anti-skid device for wheels, comprising: a casing (2, 3, 4) that comprises a tread (2), an internal portion (3) and an external portion (4); a fastening cable (5), slidably associated with the casing (2,3,4), which is slidable with respect to the casing (2, 3, 4) between at least a mounting position, in which the section of fastening cable (5) interacting with the casing (2, 3, 4) is longer in length and said tread (2) and said internal portion (3) are in a relaxed configuration, which enables the casing (2, 3, 4) to be keyed onto a wheel, and at least a fastening position, in which the section of fastening cable (5) interacting with the casing (2, 3, 4) is shorter in length and said tread (2) and said internal portion (3) are tightened in contact with the wheel.

## Description

The subject matter of the present invention is an anti-skid device for wheels.

Various anti-skid devices for wheels are currently available. The most traditional devices basically consist of a structure made up of sections of chain forming a tread suitable for being positioned on the tread of a wheel. Hooking means, which may be more or less complex, are predisposed for constraining the anti-skid device to the wheel.

More recently, anti-skid devices, without chain sections, and consisting of a casing made of fabric have been made available. The casing comprises a tread designed to be positioned in contact with the tread of the wheel, an internal portion and an external portion respectively designed to be positioned in contact with the internal flank and the external flank of the wheel. The internal portion of the casing is provided with an annular elastic, which, as it extends, enables the casing to be keyed onto the wheel. The anti-skid devices of this more recent type offer the advantage of being markedly simpler to mount with respect to the more traditional chains. In fact, unlike traditional chains, the devices of this type do not require hooking and chain tensioning elements. To mount the device, it is sufficient to key the casing onto the upper part and onto the lateral parts of the wheel. When the wheel completes one initial rotation, the casing arranges itself independently, as a result of the traction exerted by the internal elastic, even on the lower portion of the wheel that was initially in contact with the ground and on which it was evidently not possible to position the casing. The anti-skid devices of this second type, however, have some serious drawbacks. First of all, the tread made of fabric wears down very quickly. Moreover, when wet, the tread made of fabric drastically loses adherence. An additional serious drawback is represented by the presence of the internal elastic that is required to enable the device to be mounted, but it does not prevent the device from slipping off, as for example in the case of manoeuvres involving sharp steering angles or backing up.

The aim of the present invention is that of offering an anti-skid device for wheels that makes it possible to overcome the drawbacks of the anti-skid devices of the prior art.

An advantage of the anti-skid device according to the present invention is that of being very simple to mount.

Another advantage of the device according to the present invention is provided by the remarkable solidity with which it can be mounted on a wheel, eliminating the risk of the device slipping off the wheel.

Another advantage of the device according to the present invention is that it is very resistant to wear.

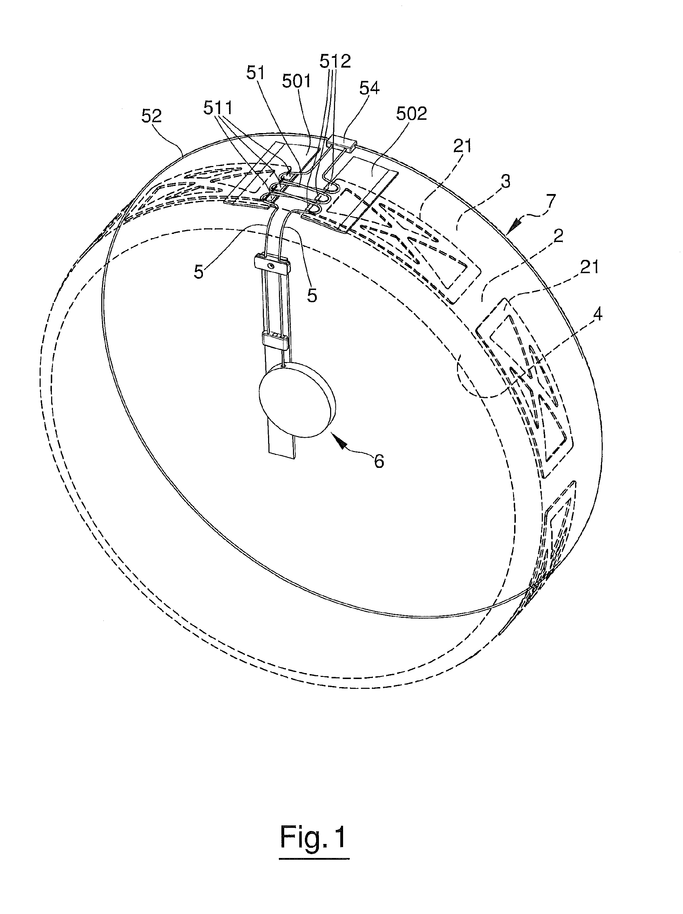

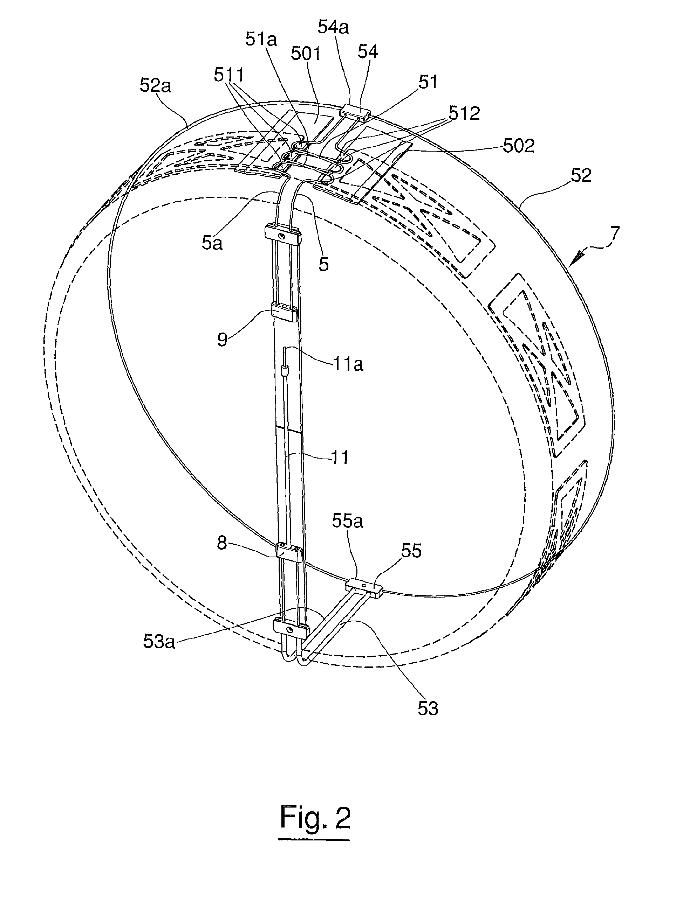

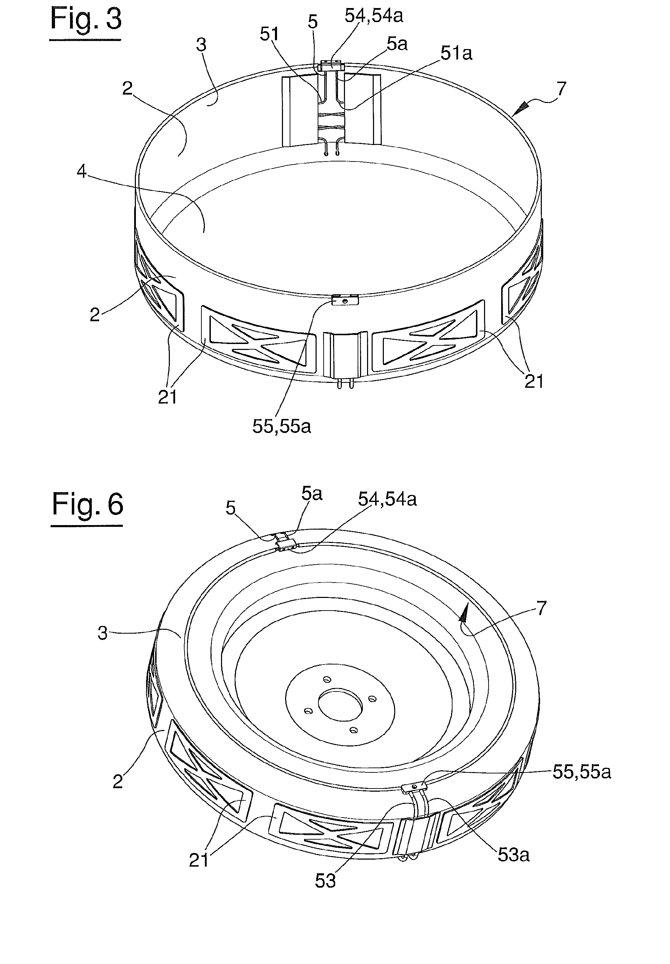

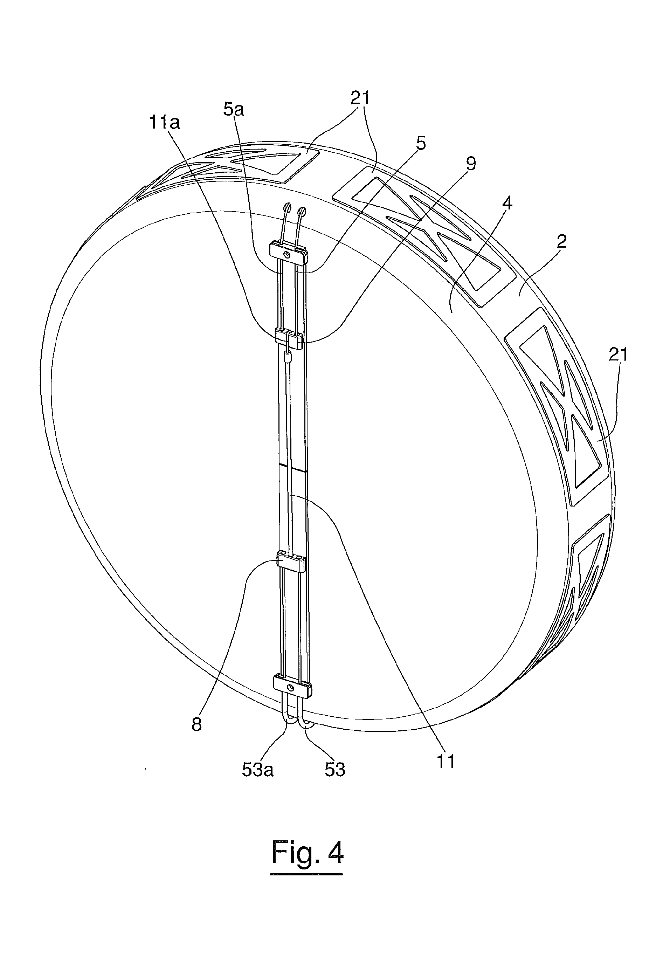

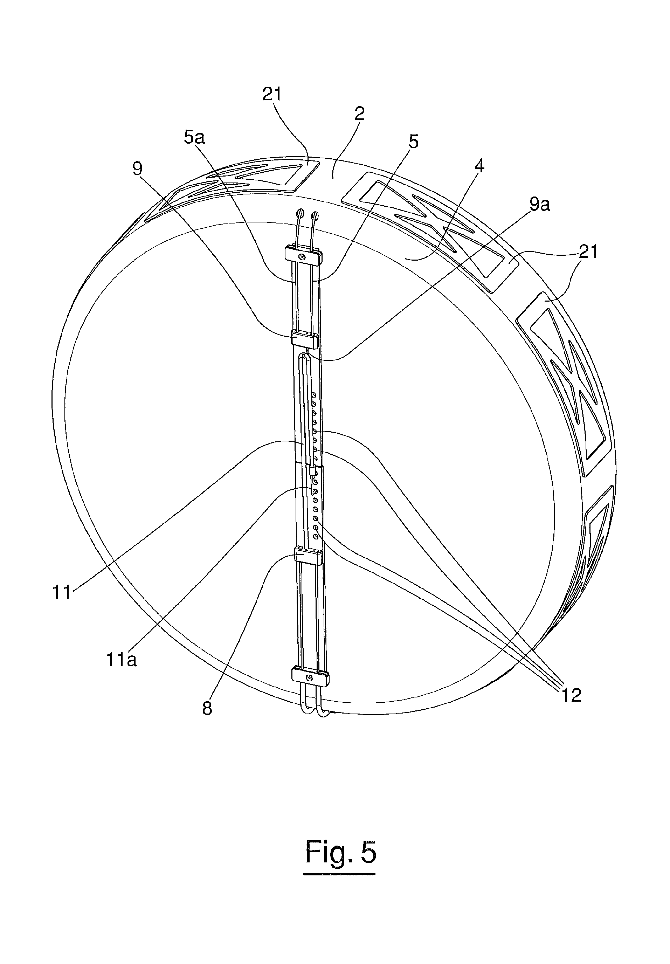

Further characteristics and advantages of the anti-skid device according to the present invention will become more apparent from the approximate, and hence non-limiting, description, provided herein below, with reference to the accompanying figures, wherein:
∼ Figure 1 is a schematic view of a first embodiment of the anti-skid device according to the present invention, wherein some parts, indicated by a dashed line, are shown transparently in order to highlight others that are hidden from view;
∼ Figure 2 is a schematic view of a second embodiment of the anti-skid device according to the present invention, wherein some parts, indicated by a dashed line, are shown transparently in order to highlight others that are hidden from view;
∼ Figure 3 is a second schematic view of the device appearing in Figure 2, from a substantially opposite viewpoint with respect to that of Figure 2;
∼ Figure 4 shows the device appearing in Figure 2 in a mounted configuration and gripped on a wheel;
∼ Figure 5 is an alternative embodiment of some details of the device appearing in Figure 4;

∼ Figure 6 shows the device appearing in Figure 4 from a substantially opposite viewpoint with respect to that of Figure 4;

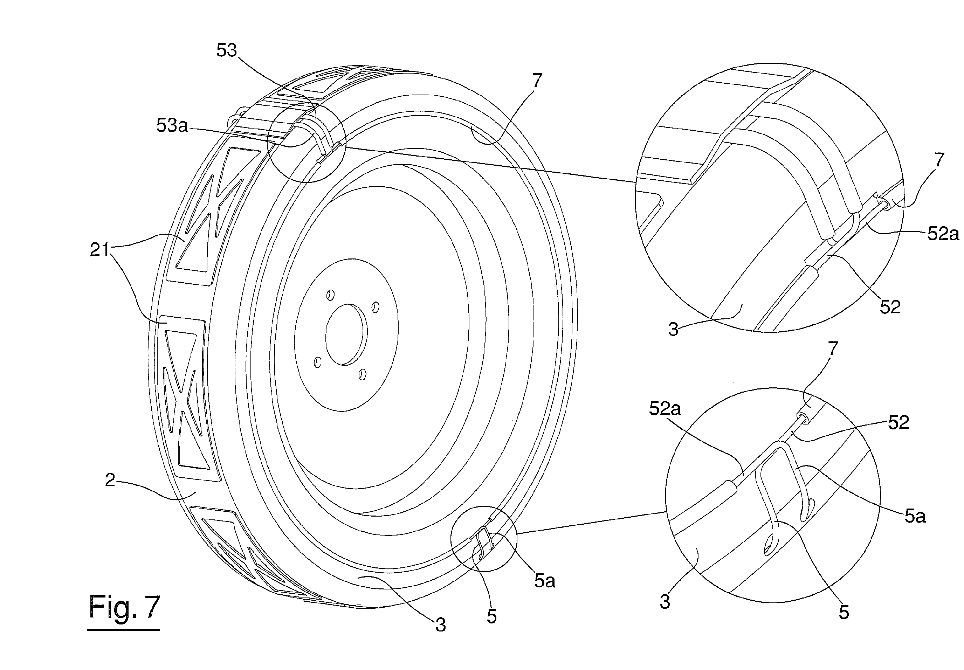

∼ Figure 7, with two enlargements, is an alternative embodiment of the anti-skid device appearing in Figure 4.

With reference to the figures listed hereinabove, the anti-skid device according to the present invention comprises a casing 2, 3, 4, shaped so as to envelop a wheel. Preferably, the casing is made of a flexible material, for example a fabric or netting. The casing is provided with a tread 2, an internal portion 3 and an external portion 4. The tread 2 is shaped so as to enable it to be arranged around the tread of a wheel; it is thus capable of taking on a substantially cylindrical conformation when the casing 2, 3, 4 is keyed onto a wheel. The internal portion 3 is shaped so as to enable it to be arranged in contact with the internal flank of the wheel. For this purpose, it preferably has an annular shape, provided with an edge 3a, which, when the casing is keyed onto the wheel, is arranged approximately concentrically to the wheel. The length of the internal portion 3 is such as to enable the casing 2, 3, 4 to be keyed onto a wheel in such a manner that the tread 2 overlaps the tread of the wheel. The external portion 4 is shaped so as to enable it to be arranged in contact with the external flank of the wheel. Preferably, the external portion 4 also has an annular shape, but it could also take on the form of a continuous layer that completely covers the external flank of the wheel.

The anti-skid device according to the present invention further comprises at least one fastening cable 5, slidably associated with the casing 2, 3, 4. The fastening cable 5 is slidable with respect to the casing 2, 3, 4 between at least a mounting position, in which the section of fastening cable 5 interacting with the casing 2, 3, 4 is longer in length, and at least a fastening position, in which the section of fastening cable 5 interacting with the casing 2, 3, 4 is shorter in length. Preferably, the fastening cable 5 is inextensible, for example in the form a sheathed or unsheathed steel cable. The inextensibility of the fastening cable 5 excludes any risk of the casing slipping off the wheel when the cable 5 is in its fastening position.

In the mounting position of the cable 5, the tread 2 and the internal portion 3 are in a relaxed configuration, which enables the casing 2, 3, 4 to be keyed onto a wheel. In the fastening position of the cable 5, the tread 2 and the internal portion 3 are instead tightened in contact with the wheel in such a manner that the casing 2, 3, 4 cannot slip off the wheel.

In a preferred embodiment of the device, illustrated in Figure 1, the cable 5 has at least a first section 51 that is associated with the tread 2 of the casing and at least a second section 52 associated with the internal portion 3 of the casing 2, 3, 4.

As mentioned previously, the fastening cable 5 is slidable between a mounting position, in which the first and the second section 51, 52 are longer in length so as to enable the casing 2, 3, 4 to be keyed on a wheel, and a fastening position, in which the first and the second section 51, 52 are shorter in length such that the tread 2 tightens on the tread of the wheel and the internal portion 3 of the casing tightens on an internal flank of the wheel.

To obtain the effect of tightening the tread 2 of the casing on the tread of the wheel, the first section 51 is arranged in alternating opposite loops. Preferably, these alternating opposite loops are defined about at least two return elements 511, 512, which are associated with the tread 2 of the casing in positions that are distanced by a predetermined angular step. In other words, the return elements 511, 512 are separated from one another by a distance that can be measured along a circumference on the tread 2 and concentric to the tread itself. Preferably, the device comprises a plurality of return elements 511, 512 facing each other two by two, as shown in Figure 1. Two return elements facing each other are separated by a predetermined distance. The return elements 511, 512 can be associated with respective supports 501, 502, which are, in turn, associated with the tread 2 of the casing in positions facing each other.

In the case in which there are only two return elements 511, 512, and in the case in which there are more return elements 511, 512, the shortening of the first section of the fastening cable 5, which slides in contact with the return elements, involves the transmission of force on the return elements 511, 512, which tends to bring them closer to one another along a circumference concentric to the tread 2, determining as a result the tightening of the tread 2 of the casing 2, 3, 4 on the tread of the wheel. The section of tread 2 comprised between the return elements 511, 512 tends to crease slightly owing to the shortening of the first section 51 of the fastening cable 5 and the resulting circumferential nearing of the return elements 511, 512 with respect to one another.

The second section 52 of the fastening cable 5 exhibits a progression that is at least partly circular and concentric with respect to the tread 2. This progression is preferably obtained by predisposing a seating 7 of circular development and solidly constrained to the internal portion 3 of the casing 2, 3, 4, in which seating 7 the fastening cable 5 is slidable. The shortening of the second section 52 involves compaction of the seating 7 and of the internal portion 3 of the casing 2, 3, 4, which tighten in contact with the internal flank of the wheel. In particular, the seating 7 and the internal portion 3 of the casing shrinks, creasing and becoming compact upon contact with the wheel. The shortening of the second section 52 also involves a reduction in the diameter of the circumference defined by the second section 52, which as a result cannot slip off the wheel. The circular progression of the second section 52 allows the tension to which the fastening cable 5 is subjected to be distributed in a uniform manner on the internal portion 3 of the casing 2, 3, 4.

The anti-skid device according to the present invention further comprises fastening means 6, associated with the casing 2, 3, 4 and predisposed to enable the fixing of the fastening cable 5 in the fastening position thereof. In addition to enabling the fixing of the cable in the fastening position, such fastening means 6 also enables the traction and shortening of the fastening cable 5 with respect to the casing 2, 3, 4. In conclusion, with reference to the first section 51, to the second section 52, and to the fastening cable 5 overall, the traction of the fastening cable 5 with respect to the casing 2, 3, 4, carried out with the aid of the fastening means, determines a shortening of the section of the fastening cable 5 interacting with the casing 2, 3, 4. This determines the compaction of the casing 2, 3, 4 about the wheel, so that the casing 2, 3, 4 can no longer slip off of the wheel.

In a first embodiment, the fastening means 6 may consist of a stop device that enables traction of the fastening cable 5 and prevents, unless there is a precise manoeuvre by the user, release sliding of the cable. In an alternative embodiment, the fastening means 6 may consist of a self-drawing device, for example the device described in the European patent 896 557. In both cases, a first end portion of the cable 5 can be solidly constrained with respect to the fastening means, whereas the opposite end portion is slidable with respect to the fastening means, which enables it to slide in a traction direction of the cable 5, while preventing it from sliding in the opposite direction, as shown in Figure 1. As an alternative, both end portions of the cable 5 can be slidable and lockable with respect to the fastening means 6, which is solidly constrained to the casing 2, 3, 4.

The mounting of the anti-skid device takes place according to the following procedure. With the fastening cable 5 in the mounting position, the casing 2, 3, 4 can be easily keyed onto the upper part of the wheel and over a good extension of the lateral parts of the wheel, excluding the lower part of the wheel resting on the ground, in that, evidently, it is not possible to pass the casing 2, 3, 4 under the wheel.

It is then possible to activate the fastening means 6, which exerts traction on the fastening cable 5, shortening it with respect to the casing 2, 3, 4 towards the fastening position. As soon as the wheel carries out a rotation that raises portion thereof initially in contact with the ground, the traction exerted by the fastening means 6 on the cable 5 enables the remaining portion of the casing 2, 3, 4, which was not initially possible to arrange about the wheel, to arrange itself independently in the proper position about the wheel. When the casing is completely arranged about the wheel, the action of the traction exerted by the fastening means 6 continues, determining the progressive shortening of the first section 51 and of the second section 52 of the fastening cable 5, as well as the resulting compaction of the casing 2, 3, 4 about the wheel.

In a second embodiment, the anti-skid device comprises a first and a second fastening cable 5, 5a. The two fastening cables 5, 5a exhibit specular progressions.

As can be seen in Figure 2, each fastening cable 5, 5a has a first section 51, 51a arranged in alternating loops. In particular, the loops formed by the first cable 5 are opposite the loops formed by the second cable 5a. In this embodiment as well, the alternating loops are defined about at least two return elements 511, 512, which are associated with the tread 2 of the casing in positions that are distanced by a predetermined angular step or by a predetermined distance along a circumference that is concentric with respect to the tread 2 itself. Preferably, the device comprises a plurality of return elements 511, 512 facing each other two by two, as shown in Figure 2. The first cable 5 is arranged about a first element 511, a second element 512 and a third return element 511, whereas the second cable is arranged about a first element 512a, a second return element 511a and a third return element 512a, respectively opposite the return elements 511, 512, 511 of the first fastening cable 5.

The two fastening cables 5, 5a further comprise second sections 52, 52a associated with the internal portion 3 of the casing 2, 3, 4, said second sections exhibiting specular progressions.

In particular, each second section 52, 52a has a progression that is at least partly semi-circular and concentric with respect to the tread 2. This progression is preferably obtained by predisposing a seating 7 of circular development and solidly constrained to the internal portion 3 of the casing 2, 3, 4, in which seating 7 each fastening cable 5, 5a is slidable specularly with respect to the other. In this embodiment of the device as well, the shortening of the second sections 52, 52a of the fastening cables 5, 5a, involves compaction of the seating 7 and of the internal portion 3 of the casing 2, 3, 4, which tighten entering into contact with the internal flank of the wheel. The shortening of the second sections 52, 52a also involves a reduction in the diameter of the circumference defined overall by the second sections 52, 52a, so that the internal portion 3 of the casing cannot slip off the wheel.

In the embodiment providing for two fastening cables 5, 5a, each cable comprises a third section 53, 53a, arranged in a diametrically opposite position with respect to the first sections 51, 51a, and extending between the internal portion 3 and the external portion 4 of the casing 2, 3, 4. Between the first section 51, 51a of each cable and the corresponding second section 52, 52a, there is interposed a return element 54, 54a associated with the casing 2, 3, 4, and guiding each cable in the transition between the first section 51, 51a and the second section 52, 52a, ensuring that the tension to which each cable 5, 5a is subjected is transmitted to the casing 2, 3, 4 in the most effective manner. Similar return elements 55, 55a are interposed, for the same reason, between the second section 52, 52a of each cable and the corresponding third section 53, 53a. The return elements 54, 54a, 55, 55a described above divert each cable 5, 5a approximately by a right angle between each second section 52, 52a of circumferential development and, respectively, a section of connection with the first section 51, 51a and a section of connection with the third section 53, 53a. The return elements 54, 54a, 55, 55a described above can be structured in the form of shaped inserts, provided with internal channels for guiding the cables 5, 5a and applied in zones diametrically opposite the internal portion 3 of the casing 2, 3, 4. As an alternative, the return elements 54, 54a, 55, 55a may consist of pockets sewn on zones diametrically opposite the internal portion 3 of the casing 2, 3, 4, as shown in Figure 7.

In the connecting zones between the first section 51, 51a and the second section 52, 52a, the two cables 5, 5a may not cross over, as shown in Figures 2 to 6, or they may cross over as they progress, as shown in Figure 7. In this second case, the two cables 5, 5a also cross over at the connecting zone between the second section 52, 52a and the third section 53, 53a, as can be seen in Figure 7. Likewise, in the embodiment with only one fastening cable 5, the cable itself can be arranged with a progression that does not cross over, as shown in Figure 1, or with a progression that exhibits a crossover. In other words, considering Figure 1, the cable 5 can extend starting from the fastening means 6, passing through the first section 51 and connecting to the second section 52, turning to the same side from which it leaves the first section 51 or turning to the opposite side. In the first case, after completing the second section 52, the cable returns to the first section 51 without crossing over in the zone of the return element 54; in the second case, the cable returns to the first section 51, crossing over in the zone of the return element 54.

The solution in which the cables do not cross over is preferable from the point of view of the simplicity of execution and assembly. The solution in which the two cables 5, 5a cross over is preferable in terms of facilitating greater uniformity in the distribution of tension along the two cables.

The utilisation of two fastening cables 5, 5a allows for simplification of the realisation of the fastening means 6. As shown in Figures 2 and 4, the first and the second fastening cable 5, 5a, at the ends thereof, are associated with two end bodies 8, 9, which are reciprocally nearingly and distancingly mobile. A hooking means 10 is predisposed to enable the constraining of the two end bodies to one another in a minimum-distance position. This hooking means 10 comprises an elastic 11 that can be removably associated with the end bodies 8, 9. The two fastening cables 5, 5a can thus be drawn by means of the end bodies 8, 9, so as to bring about the shortening of the first section 51, 51a and of the second section 52, 52a, and then hooked to one another by means of the elastic 11. Preferably, the elastic 11 is associated in a permanent manner with an end body, while it can be removably constrained to the other end body, for example by means of a hook 11a. To permit greater traction of the elastic 11, it is possible to fasten one end of the elastic 11 to a first end body and arrange a return 9a on a second end body 9. A plurality of hooking seatings 12 can be associated with the casing 2, 3, 4, particularly with the external portion 4 of the casing, so as to enable a removable fastening of the hook 11a. In this case, the elastic 11 can be drawn and turned around the return 9a by 180°. The elastic 11 can then be drawn further in the opposite direction and fastened to one of the hooking seatings 12 by means of the hook 11a.

The mounting of the device in the embodiment with two fastening cables 5, 5a, substantially takes place with the same procedure described previously for the embodiment with only one fastening cable 5. In this case, after having keyed the casing 2, 3, 4 onto the upper part and onto the lateral parts of the wheel, it is possible to hook the elastic 11 onto the end body or one of the hooking seatings 12. The traction exerted by the elastic 11 on the fastening cables 5, 5a, enables the part of the casing 2, 3, 4 initially positioned in the lower part of the wheel to arrange itself independently on the wheel. When the casing is completely arranged about the wheel, the action of the traction exerted by the elastic 11 continues, determining the progressive shortening of the first section 51, 51a and of the second section 52, 52a of the fastening cables 5, 5a, as well as the resulting compaction of the casing 2, 3, 4 about the wheel.

The casing 2, 3, 4 is preferably provided with one or more adhering elements 21 applied externally to the tread 2 so as to enter into contact with the ground. Such one or more adhering elements 21 can be made of a material that offers greater wear resistance with respect to the material with which the casing 2, 3, 4 is made. For example, the adhering elements 21 can be made of a material of the type commonly used for the production of tyres.

In the examples illustrated, the casing 2, 3, 4 is provided with a plurality of adhering elements 21 aligned along the tread 2. By way of example only, the adhering elements 21 have the form of rectangular frames provided with intersected diagonal sections, although other embodiments are possible. The use of distinct adhering elements 21 makes it possible to protect any possible creases or folds in the tread 2 in the zone of the first section 51 of the fastening cable 5, in that such possible creases or folds would not protrude with respect to the adhering elements 21. The casing could also be provided with only one adhering element 21 in the form of a band, shaped in a predetermined manner, applied to the tread 2. The adhering elements 21 allow for a marked increase in the grip of the anti-skid device on a snow-covered and/or muddy surface on which the wheel rolls.

## Claims

1. An anti-skid device for wheels, **characterised in that** it comprises: a casing (2, 3, 4) which comprises a tread (2), an internal portion (3) and an external portion (4); a fastening cable (5), slidably associated to the casing (2, 3, 4), which is slidable with respect to the casing (2, 3, 4) between at least a mounting position, in which the section of fastening cable (5) interacting with the casing (2, 3, 4) has a greater length and said tread (2) and said internal portion (3) are in a relaxed configuration which enables the casing (2, 3, 4) to be keyed onto a wheel, and at least a fastening position, in which the section of fastening cable (5) interacting with the casing (2, 3, 4) has a smaller length and said tread (2) and said internal portion (3) are tightened in contact with the wheel.

2. The anti-skid device according to claim 1, wherein said fastening cable (5) comprises at least a first section (51) associated to the tread (2) of the casing and at least a second section (52) associated to the internal portion (3) of the casing (2, 3, 4); said fastening cable (5) being slidable between a mounting position, in which the first and the second section (51, 52) have a greater length such as to enable the casing (2, 3, 4) to be keyed on a wheel, and a fastening position, in which the first and the second section (51,52) have a smaller length such that the tread (2) tightens on the tread of the wheel and the internal portion (3) of the casing tightens on an internal flank of the wheel.

3. The anti-skid device according to claim 2, wherein the first section (51) is arranged in alternating opposite loops.

4. The anti-skid device according to claim 3, wherein said alternating opposite loops are defined about at least two return elements (511, 512) associated to the tread (2) of the casing in positions that are distanced by a predetermined angular step.

5. The anti-skid device according to one of the preceding claims, wherein the second section (52) of the fastening cable (5) exhibits a progression which is at least partly circular and concentric with respect to the tread (2).

6. The device according to one of claims from 2 to 5, wherein, in the connecting zone between the first section (51) and the second section (52), the fastening cable (5) exhibits a non-crossed progression or exhibits a crossed progression.

7. The anti-skid device according to one of the preceding claims, comprising fastening means (6), associated to the casing (2, 3, 4), predisposed to enable fixing the fastening cable (5) in the fastening position thereof.

8. The anti-skid device of one of the preceding claims, comprising a seating (7) predisposed such as to slidably accommodate the second section (52) of the fastening cable (5).

9. The anti-skid device of one of the preceding claims, comprising a first and a second fastening cable (5, 5a).

10. The anti-skid device according to claim 9, wherein the two fastening cables (5, 5a) exhibit specular progressions and each fastening cable (5, 5a) comprises: a first section (51, 51a) associated to the tread (2) and arranged in alternating loops opposite to the loops formed by the other fastening cable; a second section (52, 52a) associated to the internal portion (3) of the casing (2, 3, 4).

11. The anti-skid device according to claim 10, and one of claims from 8 to 14, wherein, in the connecting zone between the first section (51, 51a) and the second section (52, 52a), the two cables (5, 5a) as they progress can either not cross or can cross..

12. The anti-skid device according to one of claims from 9 to 11, wherein the first and the second fastening cables (5, 5a) at ends thereof are associated to two end bodies (8, 9) which are reciprocally nearingly and distancingly mobile, hooking means (10) being predisposed to enable constraining the two end bodies to one another in a minimum-distance position.

13. The device according to claim 12, wherein said hooking means (10) comprise an elastic (11) which can be removably associated to said end bodies (8, 9).

14. The device according to claim 13, wherein said elastic (11) is solidly constrained, at a first end thereof, to a first end body (8) and said hooking means comprise a return (9a), associated to a second end body (9), and a plurality of hooking seatings (12) predisposed to enable a removable fastening of a hook (11a) associated to a second end of the elastic (11).

15. The device according to one of the preceding claims, wherein the casing (2, 3, 4) is preferably provided with one or more adhering elements (21) applied externally to the tread (2) such as to enter into contact with the ground.
